# EUROPÄISCHE PATENTSCHRIFT

(11) **EP 3 058 696 B1**
(45) Veröffentlichungstag und Bekanntmachung des Hinweises auf die Patenterteilung: **03.07.2019**
(21) Anmeldenummer: 14783869.2
(22) Anmeldetag: 14.10.2014
(51) Int. Cl.: H04L 29/06, G06F 21/42

(54) **VERFAHREN ZUR AUTOMATISCHEN AUTHENTIFIZIERUNG EINES BENUTZERS GEGENÜBER EINEM ELEKTRONISCHEN NETZWERKDIENST**
METHOD FOR AUTOMATICALLY AUTHENTICATING A USER TO AN ELECTRONIC NETWORK SERVICE
PROCÉDÉ D'AUTHENTIFICATION AUTOMATIQUE D'UN UTILISATEUR CONCERNANT UN SERVICE DE RÉSEAU ÉLECTRONIQUE

(30) Priorität: 18.10.2013 DE 102013111498
(43) Veröffentlichungstag der Anmeldung: 24.08.2016
(73) Patentinhaber: Deutsche Telekom AG, 53113 Bonn (DE)
(72) Erfinder: SONNTAG, Thomas, 53343 Wachtberg (DE)
(74) Vertreter: Patentship Patentanwaltsgesellschaft mbH
(86) Internationale Anmeldenummer: PCT/EP2014/071957
(87) Internationale Veröffentlichungsnummer: WO 2015/055611

(56) Entgegenhaltungen:
- EP-A1- 2 651 097
- WO-A2-2012/136163
- DE-A1-102013 001 733
- US-A1- 2012 246 702
- US-B1- 6 360 254
- Anonymous: "html - hidden field", , 7 August 2013 (2013-08-07), Retrieved from the Internet: URL:https://web.archive.org/web/2013080700 0956/http://www.tizag.com/htmlT/htmlhidden .php [retrieved on 2018-06-29]

## Beschreibung

### TECHNISCHES GEBIET

Die Erfindung betrifft ein Verfahren zur Authentifizierung eines Benutzers.

### TECHNISCHER HINTERGRUND

Zahlreiche elektronische Netzwerkdienste erfordern die Authentifizierung eines Benutzers mittels Authentifizierungsdaten, beispielsweise Benutzerkennung und Passwort. Für unterschiedliche elektronische Netzwerkdienste können dabei unterschiedliche Authentifizierungsdaten eingesetzt werden.

Zur Verwaltung von Authentifizierungsdaten durch den Benutzer kann ein Authentifizierungsdatenspeicher, beispielsweise ein Passwortspeicher oder ein Passwortsafe, verwendet werden. Der Authentifizierungsdatenspeicher erleichtert die Verwaltung von Authentifizierungsdaten, indem die Authentifizierungsdaten für unterschiedliche elektronische Netzwerkdienste gespeichert werden. Bei einem späteren Authentifizieren des Benutzers an dem elektronischen Netzwerkdienst können die gespeicherten Authentifizierungsdaten zur Authentifizierung verwendet werden.

Der Authentifizierungsspeicher kann in einem Kommunikationsterminal, beispielsweise einem Personal Computer, Mobiltelefon oder Smartphone, des Benutzers abgelegt sein. Verwendet ein Benutzer eine Mehrzahl von Kommunikationsterminals mit Authentifizierungsdatenspeichern, so müssen die Authentifizierungsdaten in den Authentifizierungsdatenspeichern synchronisiert werden. Ändert der Benutzer die in einem Authentifizierungsdatenspeicher gespeicherten Authentifizierungsdaten, so müssen die vorgenommenen Änderungen auf alle anderen Authentifizierungsdatenspeicher übertragen werden.

Insbesondere wenn unterschiedliche Kommunikationsterminals verwendet werden, wird das Synchronisieren der Authentifizierungsdaten in den unterschiedlichen Authentifizierungsdatenspeichern durch den Benutzer als unkomfortabel empfunden.

Die Druckschrift EP 2 651 097 A1 betrifft ein Verfahren zum Authentifizieren eines Teilnehmers eines Kommunikationsterminals, auf dem zumindest eine Applikation installiert ist, bei einem Dienst auf einem Dienstserver.

Die Druckschrift WO 2012/136163A2betrifft ein Authentifizierungsverfahren für ein WLAN Netzwerk.

Die Druckschrift US 2012/246702 A1 betrifft ein Verfahren zur Zugangsauthentifizierung.

Die Druckschrift US 6 360 254 B1 betrifft ein Verfahren zum Bereitstellen eines sicheren Zugangs für einen Benutzer zu einer privaten Ressource über ein öffentlich zugängliches Netzwerk, ohne den Benutzer aufzufordern, Authentifikationsinformationen einzugeben.

### BESCHREIBUNG DER ERFINDUNG

Es ist daher die Aufgabe der vorliegenden Erfindung, ein effizientes Konzept zur automatischen Authentifizierung eines Benutzers gegenüber einem elektronischen Netzwerkdienst zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe durch einen automatischen Nachweis der Zuordnung einer Netzwerkadresse zu dem Benutzer gelöst werden kann. Dazu wird vom elektronischen Netzwerkdienst eine Nachricht mit Authentifizierungsdaten an die Netzwerkadresse gesendet. Der Benutzer weist den Empfang der Nachricht und damit die Zuordnung der Netzwerkadresse automatisch nach, indem die Authentifizierungsdaten automatisch aus der Nachricht extrahiert und automatisch an den Netzwerkdienst übermittelt werden. Dadurch wird erreicht, dass ein automatisches Authentifizieren des Benutzers gegenüber einem elektronischen Netzwerkdienst effizient durchgeführt werden kann.

Gemäß einem ersten Aspekt betrifft die Erfindung ein Verfahren zur automatischen Authentifizierung eines Benutzers gegenüber einem elektronischen Netzwerkdienst mittels einer Netzwerkadresse des Benutzers, mit einem Übermitteln der Netzwerkadresse des Benutzers an den elektronischen Netzwerkdienst über ein Kommunikationsnetzwerk, einem Senden einer Nachricht, welche Authentifizierungsdaten des Benutzers umfasst, an die übermittelte Netzwerkadresse durch den elektronischen Netzwerkdienst über das Kommunikationsnetzwerk, einem automatischen Extrahieren der Authentifizierungsdaten des Benutzers aus der empfangenen Nachricht und einem automatischen Authentifizieren des Benutzers gegenüber dem elektronischen Netzwerkdienst unter Verwendung der extrahierten Authentifizierungsdaten des Benutzers.

Die Authentifizierung des Benutzers mittels der Netzwerkadresse des Benutzers kann der Nachweis sein, dass die Netzwerkadresse dem Benutzer zugeordnet ist.

Der Benutzer kann eine Person sein, welche sich gegenüber dem elektronischen Netzwerkdienst authentifiziert. Dazu kann der Benutzer ein Kommunikationsterminal verwenden, welches ausgebildet ist, an die Netzwerkadresse des Benutzers gesendete Nachrichten zu empfangen. Das Kommunikationsterminal kann ein Personal Computer, ein Telefon, ein Mobiltelefon oder ein Smartphone sein.

Die Netzwerkadresse des Benutzers kann eine Adresse im Kommunikationsnetzwerk sein, welche eindeutig dem Benutzer zugeordnet ist. Das Kommunikationsnetzwerk kann ein Computernetzwerk, beispielsweise das Internet, ein Telefonnetzwerk oder ein Mobilfunknetzwerk sein.

Der elektronische Netzwerkdienst kann ein Dienst sein, welcher eine elektronische Dienstleistung bereitstellt, beispielsweise einen Internetdienst, eine Webserveranwendung oder eine Webapplikation. Zur Verwendung des elektronischen Netzwerkdienstes kann eine Authentifizierung des Benutzers erforderlich sein.

Die Authentifizierungsdaten können eine Kombination aus einer Benutzerkennung und einem der Benutzerkennung zugeordneten Passwort sein. Ferner können die Authentifizierungsdaten einen Einmalschlüssel umfassen.

Die Benutzerkennung kann eine Buchstaben- und/oder Zahlenfolge sein. Ferner kann die Benutzerkennung durch ein Bitmuster gebildet sein. Das Passwort kann eine Buchstaben- und/oder Zahlenfolge sein. Ferner kann das Passwort durch ein Bitmuster gebildet sein.

Der Einmalschlüssel kann eine Buchstaben- und/oder Zahlenfolge sein. Ferner kann der Einmalschlüssel durch ein Bitmuster gebildet sein. Der Einmalschlüssel kann nur für eine Verwendung gültig sein.

Die Authentifizierungsdaten können in einem maschinenlesbaren Format, beispielsweise in Form einer Datei im Extensible Markup Language (XML) Format, übermittelt werden. Da die Authentifizierungsdaten in einem maschinenlesbaren Format vorliegen, können diese automatisch extrahiert werden.

Gemäß einer Ausführungsform ist die Netzwerkadresse eine der folgenden Netzwerkadressen: eine Adresse für den elektronischen Postverkehr oder eine Anschlussnummer, welche einem Telefonanschluss, insbesondere einem mobilen Telefonanschluss, zugeordnet ist. Dadurch wird der Vorteil erreicht, dass eine eindeutige Netzwerkadresse eingesetzt werden kann.

Der elektronische Postverkehr kann einen elektronischen Nachrichtenaustausch mittels Electronic Mail (E-Mail) umfassen. Die Adresse für den elektronischen Postverkehr kann eine E-Mail-Adresse sein.

Die Anschlussnummer kann eine Zahlenfolge sein, welche dem Telefonanschluss eindeutig zugeordnet ist, beispielsweise eine Mobile Subscriber Integrated Services Digital Network Number (MSISDN). Der Telefonanschluss kann ein Anschluss eines Telefons an ein Telefonnetzwerk sein. Der mobile Telefonanschluss kann ein Anschluss eines Mobiltelefons an ein Mobilfunknetzwerk sein.

Die Nachricht kann eine elektronische Post-Nachricht, beispielsweise eine E-Mail-Nachricht sein. Ferner kann die Nachricht eine Kurznachricht, beispielsweise eine Short Message Service (SMS) Nachricht, sein.

Gemäß einer Ausführungsform wird die übermittelte Netzwerkadresse durch den elektronischen Netzwerkdienst mit vorgespeicherten Netzwerkadressen verglichen, um eine Zugriffsberechtigung des Benutzers zu überprüfen. Dadurch wird der Vorteil erreicht, dass eine effiziente Zugangskontrolle zu dem elektronischen Netzwerkdienst realisiert werden kann.

Die Zugriffsberechtigung des Benutzers kann vorliegen, wenn die übermittelte Netzwerkadresse identisch mit einer der vorgespeicherten Netzwerkadressen ist. Die Zugriffsberechtigung des Benutzers kann eine Berechtigung sein, eine vom elektronischen Netzwerkdienst bereitgestellte elektronische Dienstleistung zu verwenden.

Gemäß einer Ausführungsform wird die automatische Authentifizierung des Benutzers durch den elektronischen Netzwerkdienst nach Ablauf einer vorbestimmten Zeitspanne nach dem Übermitteln der Netzwerkadresse automatisch abgelehnt, falls keine automatische Authentifizierung erfolgte. Dadurch wird der Vorteil erreicht, dass der elektronische Netzwerkdienst effizient implementiert werden kann.

Die vorbestimmte Zeitspanne kann beispielsweise 10 Millisekunden, 100 Millisekunden, 1 Sekunde, 10 Sekunden, 1 Minute, 5 Minuten, 15 Minuten, 30 Minuten, 1 Stunde, 2 Stunden, 6 Stunden, 12 Stunden, 1 Tag oder 2 Tage sein.

Gemäß einer Ausführungsform wird durch den elektronischen Netzwerkdienst eine Eingabemaske für die Eingabe der Netzwerkadresse bereitgestellt oder übermittelt. Dadurch wird der Vorteil erreicht, dass die Netzwerkadresse effizient übermittelt werden kann.

Die Eingabemaske kann gemäß dem Hypertext Markup Language (HTML) Format gebildet sein. Die Eingabemaske kann Eingabefelder für die Benutzerkennung und/oder die Netzwerkadresse des Benutzers umfassen. Die Eingabemaske kann dem Benutzer auf einer Anzeige des Kommunikationsterminals angezeigt werden.

Gemäß einer Ausführungsform umfassen die Authentifizierungsdaten zumindest eines der folgenden Daten: eine Verfahrenskennung, welche dem Verfahren zur automatischen Authentifizierung zugeordnet ist, um die Ausführung des Verfahrens durch einen Vergleich der Verfahrenskennung mit einer vorgespeicherten Referenzverfahrenskennung zu erkennen, die Netzwerkadresse des Benutzers, um die Authentifizierungsdaten dem Benutzer zuzuordnen, eine Transaktionskennung, um die Authentifizierungsdaten durch Vergleich der Transaktionskennung mit Referenztransaktionskennungen einem Authentifizierungsvorgang zuzuordnen, und ein Passwort, insbesondere einen Einmalschlüssel, um den Benutzer durch ein Übermitteln des Passworts an den elektronischen Netzwerkdienst gegenüber diesem zu authentifizieren. Dadurch wird der Vorteil erreicht, dass das Verfahren effizient ausgeführt werden kann.

Die Verfahrenskennung kann eine Buchstaben- und/oder Zahlenfolge sein. Ferner kann die Verfahrenskennung durch ein Bitmuster gebildet sein. Die Verfahrenskennung kann mittels der Eingabemaske bereitgestellt oder übermittelt werden.

Die Referenzverfahrenskennung kann eine vorgespeicherte Verfahrenskennung sein, welche dem Ausführens des Verfahrens zur automatischen Authentifizierung zugeordnet ist.

Die Transaktionskennung kann eine Buchstaben- und/oder Zahlenfolge sein. Ferner kann die Transaktionskennung durch ein Bitmuster gebildet sein. Die Transaktionskennung kann bei Ausführung des Verfahrens zur automatischen Authentifizierung neu generiert werden. Ferner kann die Transaktionskennung mittels der Eingabemaske bereitgestellt oder übermittelt werden.

Die Referenztransaktionskennung kann eine zwischengespeicherte Transaktionskennung sein, welche einem Authentifizierungsvorgang zugeordnet ist.

Gemäß einer Ausführungsform werden die Authentifizierungsdaten mit Referenzdaten verglichen, um die Ausführung des Verfahrens zu erkennen. Dadurch wird der Vorteil erreicht, dass eine Ausführung des Verfahrens zur automatischen Authentifizierung effizient erkannt werden kann.

Die Referenzdaten können eine Buchstaben- und/oder Zahlenfolge sein. Ferner können die Referenzdaten durch ein Bitmuster gebildet sein.

Gemäß der Efindung umfasst die Nachricht ferner eine Verfahrenskennung, welche dem Verfahren zur automatischen Authentifizierung zugeordnet ist, wobei die Verfahrenskennung extrahiert wird, um die Ausführung des Verfahrens zu erkennen. Dadurch wird der Vorteil erreicht, dass eine Ausführung des Verfahrens zur automatischen Authentifizierung effizient erkannt werden kann.

Die Verfahrenskennung kann die oben beschriebene Verfahrenskennung sein.

Gemäß einer Ausführungsform wird eine Anzeige der Nachricht, mittels welcher die Authentifizierungsdaten übermittelt werden, gegenüber dem Benutzer unterbunden. Dadurch wird der Vorteil erreicht, dass das Verfahren effizient ausgeführt werden kann.

Gemäß einer Ausführungsform umfasst die Nachricht ferner eine Transaktionskennung, wobei die Transaktionskennung aus der Nachricht extrahiert und mit einer Referenztransaktionskennung verglichen wird, um die Authentizität der Nachricht zu überprüfen. Dadurch wird der Vorteil erreicht, dass die Authentizität der Nachricht effizient überprüft werden kann.

Die Transaktionskennung kann die oben beschriebene Transaktionskennung sein. Die Referenztransaktionskennung kann die oben beschriebene Referenztransaktionskennung sein. Sind Transaktionskennung und Referenztransaktionskennung identisch, so kann die Authentizität der Nachricht vorliegen.

Gemäß einer Ausführungsform umfasst die Nachricht eine Transaktionskennung und ein Passwort, insbesondere einen Einmalschlüssel, wobei die Transaktionskennung und das Passwort aus der Nachricht extrahiert und an den elektronischen Netzwerkdienst übermittelt werden, um den Benutzer gegenüber dem elektronischen Netzwerkdienst zu authentifizieren. Dadurch wird der Vorteil erreicht, dass die automatische Authentifizierung effizient ausgeführt werden kann.

Gemäß einer Ausführungsform wird die übermittelte Transaktionskennung durch den elektronischen Netzwerkdienst mit Referenztransaktionskennungen verglichen, um die Authentifizierung des Benutzers zu überprüfen. Dadurch wird der Vorteil erreicht, dass die Authentifizierung des Benutzers auf effiziente Weise überprüft werden kann.

Sind übermittelte Transaktionskennung und Referenztransaktionskennung identisch, so kann die Authentizität der Nachricht vorliegen.

Gemäß einer Ausführungsform wird das übermittelte Passwort durch den elektronischen Netzwerkdienst mit Referenzpasswörtern verglichen, um die Authentifizierung des Benutzers zu überprüfen. Dadurch wird der Vorteil erreicht, dass die Authentifizierung des Benutzers auf effiziente Weise überprüft werden kann.

Das Referenzpasswort kann ein zwischengespeichertes Passwort sein. Ist das übermittelte Passwort identisch mit einem der Referenzpasswörter, so kann die Authentizität der Nachricht vorliegen.

Gemäß einer Ausführungsform umfasst die Nachricht ferner eine Netzwerkadresse des elektronischen Netzwerkdienstes, wobei die Netzwerkadresse des elektronischen Netzwerkdienstes aus der Nachricht extrahiert wird, um den Benutzer durch Aufruf der Netzwerkadresse des elektronischen Netzwerkdienstes gegenüber dem elektronischen Netzwerkdienst zu authentifizieren. Dadurch wird der Vorteil erreicht, dass die automatische Authentifizierung auf effiziente Weise durchgeführt werden kann.

Die Netzwerkadresse des elektronischen Netzwerkdienstes kann eine Internetadresse, beispielsweise in Form eines Uniform Resource Locators (URL), sein.

Gemäß einer Ausführungsform ist in der Netzwerkadresse des elektronischen Netzwerkdienstes ein Passwort, insbesondere ein Einmalschlüssel, integriert, wobei das Passwort durch den elektronischen Netzwerkdienst aus der Netzwerkadresse des elektronischen Netzwerkdienstes extrahiert und mit einem Referenzpasswort verglichen wird, um die Authentifizierung des Benutzers zu überprüfen. Dadurch wird der Vorteil erreicht, dass die Authentifizierung auf effiziente Weise überprüft werden kann.

Ist das extrahierte Passwort identisch mit einem der Referenzpasswörter, so kann die Authentizität der Nachricht vorliegen.

Die Erfindung kann in Software und/oder in Hardware realisiert werden.

### BESCHREIBUNG DER FIGUREN

Weitere Ausführungsbeispiele werden bezugnehmend auf die beiliegenden Zeichnungen näher erläutert. Es zeigen:
- Fig. 1: ein schematisches Diagramm eines Verfahrens zur automatischen Authentifizierung eines Benutzers gegenüber einem elektronischen Netzwerkdienst mittels einer Netzwerkadresse des Benutzers gemäß einer Ausführungsform;
- Fig. 2: ein schematisches Diagramm eines Authentifizierungsszenarios zur automatischen Authentifizierung eines Benutzers gegenüber einem elektronischen Netzwerkdienst mittels einer Netzwerkadresse des Benutzers gemäß einer Ausführungsform;
- Fig. 3: ein schematisches Diagramm eines Authentifizierungsszenarios zur automatischen Authentifizierung eines Benutzers gegenüber einem elektronischen Netzwerkdienst unter Verwendung elektronischer Post gemäß einer Ausführungsform;
- Fig. 4: ein schematisches Diagramm eines Verfahrens zur automatischen Authentifizierung eines Benutzers gegenüber einem elektronischen Netzwerkdienst unter Verwendung elektronischer Post gemäß einer Ausführungsform;
- Fig. 5: ein schematisches Diagramm eines Authentifizierungsszenarios zur automatischen Authentifizierung eines Benutzers gegenüber einem elektronischen Netzwerkdienst unter Verwendung einer Kurznachricht gemäß einer Ausführungsform; und
- Fig. 6: ein schematisches Diagramm eines Verfahrens zur automatischen Authentifizierung eines Benutzers gegenüber einem elektronischen Netzwerkdienst unter Verwendung einer Kurznachricht gemäß einer Ausführungsform.

### DETAILIERTE BESCHREIBUNG DER FIGUREN

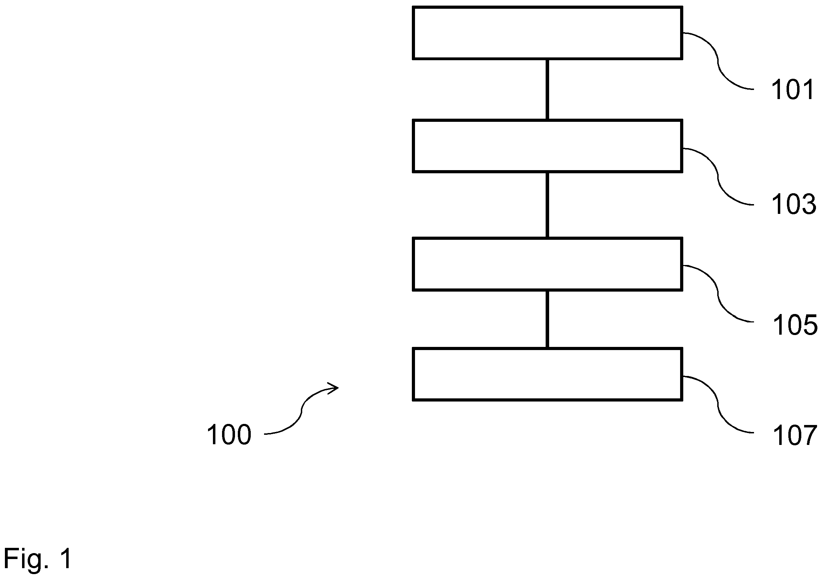

Fig. 1 zeigt ein schematisches Diagramm eines Verfahrens 100 zur automatischen Authentifizierung eines Benutzers gegenüber einem elektronischen Netzwerkdienst mittels einer Netzwerkadresse des Benutzers gemäß einer Ausführungsform.

Das Verfahren 100 umfasst ein Übermitteln 101 der Netzwerkadresse des Benutzers an den elektronischen Netzwerkdienst über ein Kommunikationsnetzwerk, ein Senden 103 einer Nachricht, welche Authentifizierungsdaten des Benutzers umfasst, an die übermittelte Netzwerkadresse durch den elektronischen Netzwerkdienst über das Kommunikationsnetzwerk, ein automatisches Extrahieren 105 der Authentifizierungsdaten des Benutzers aus der empfangenen Nachricht, und ein automatisches Authentifizieren 107 des Benutzers gegenüber dem elektronischen Netzwerkdienst unter Verwendung der extrahierten Authentifizierungsdaten des Benutzers.

Das Verfahren kann unter Verwendung eines Kommunikationsterminals des Benutzers durchgeführt werden.

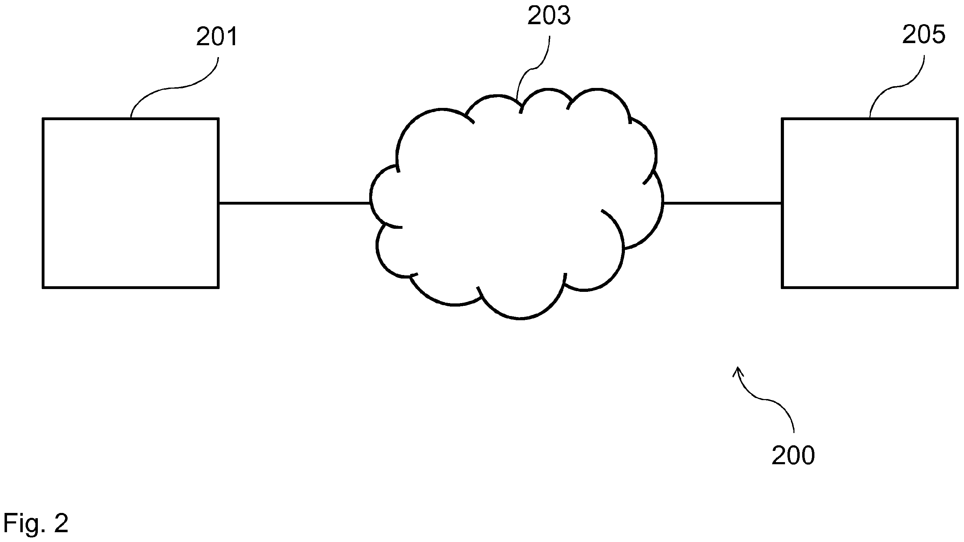

Fig. 2 zeigt ein schematisches Diagramm eines Authentifizierungsszenarios 200 zur automatischen Authentifizierung eines Benutzers gegenüber einem elektronischen Netzwerkdienst 201 mittels einer Netzwerkadresse des Benutzers gemäß einer Ausführungsform. Das Authentifizierungsszenario 200 umfasst ferner ein Kommunikationsnetzwerk 203 und ein Kommunikationsterminal 205.

Der elektronische Netzwerkdienst 201 kann ein Dienst sein, welcher eine elektronische Dienstleistung bereitstellt, beispielsweise einen Internetdienst, eine Webserveranwendung oder eine Webapplikation. Zur Verwendung des elektronischen Netzwerkdienstes 201 kann eine Authentifizierung des Benutzers erforderlich sein. Das Kommunikationsnetzwerk 203 kann ein Computernetzwerk, beispielsweise das Internet, ein Telefonnetzwerk oder ein Mobilfunknetzwerk sein. Das Kommunikationsterminal 205 kann ein Personal Computer, ein Telefon, ein Mobiltelefon oder ein Smartphone sein.

Das Verfahren zur automatischen Authentifizierung eines Benutzers gegenüber dem elektronischen Netzwerkdienst 201 mittels einer Netzwerkadresse des Benutzers kann folgendermaßen durchgeführt werden.

Die Netzwerkadresse des Benutzers kann mittels des Kommunikationsterminals 205 an den elektronischen Netzwerkdienst 201 über das Kommunikationsnetzwerk 203 übermittelt werden. Daraufhin kann eine Nachricht, welche Authentifizierungsdaten des Benutzers umfasst, an die übermittelte Netzwerkadresse durch den elektronischen Netzwerkdienst 201 über das Kommunikationsnetzwerk 203 gesendet werden.

Anschließend können die Authentifizierungsdaten des Benutzers aus der empfangenen Nachricht automatisch extrahiert werden, beispielsweise durch das Kommunikationsterminal 205. Abschließend kann der Benutzer gegenüber dem Netzwerkdienst 201 unter Verwendung der extrahierten Authentifizierungsdaten des Benutzers automatisch authentifiziert werden. Die Authentifizierungsdaten können ein Passwort umfassen, wobei das Passwort durch das Kommunikationsterminal 205 über das Kommunikationsnetzwerk 203 an den elektronischen Netzwerkdienst 201 übermittelt wird, um den Benutzer gegenüber dem elektronischen Netzwerkdienst 201 zu authentifizieren.

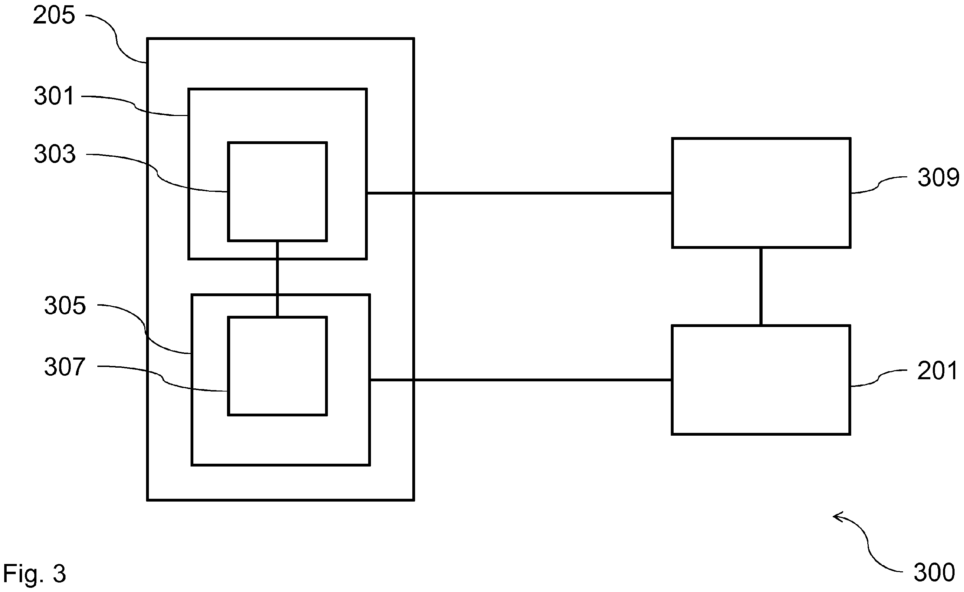

Fig. 3 zeigt ein schematisches Diagramm eines Authentifizierungsszenarios 300 zur automatischen Authentifizierung eines Benutzers gegenüber einem elektronischen Netzwerkdienst 201 unter Verwendung elektronischer Post gemäß einer Ausführungsform.

Das Authentifizierungsszenario 300 umfasst den elektronischen Netzwerkdienst 201, das Kommunikationsterminal 205 und die Sendekomponente 309 für elektronische Post. Ferner umfasst das Kommunikationsterminal 205 eine Empfangskomponente 301 für elektronische Post, welche eine Extraktionskomponente 303 umfasst. Das Kommunikationsterminal 205 umfasst ferner eine Kommunikationskomponente 305, welche eine Authentifizierungskomponente 307 umfasst.

Der elektronische Netzwerkdienst 201 ist mit der Sendekomponente 309 für elektronische Post und der Kommunikationskomponente 305 verbunden. Ferner ist die Sendekomponente 309 für elektronische Post mit der Empfangskomponente 301 für elektronische Post verbunden. Weiter ist die Extraktionskomponente 303 mit der Authentifizierungskomponente 307 verbunden.

Das Kommunikationsterminal 205 kann ein Personal Computer, ein Telefon, ein Mobiltelefon oder ein Smartphone sein. Die Sendekomponente 309 für elektronische Post kann ein Mailserver oder eine Mailserveranwendung sein. Die elektronische Post kann eine E-Mail-Nachricht sein. Die Empfangskomponente 301 für elektronische Post kann ein E-Mail-Client oder ein Mailclient sein. Die Extraktionskomponente 303 kann ein E-Mail-Plugin oder ein Plugin des E-Mail-Clients oder des Mailclients sein. Die Kommunikationskomponente 305 kann ein Web-Client sein. Die Authentifizierungskomponente 307 kann ein Web-Plugin oder ein Plugin des Web-Clients sein.

Der Benutzer oder der User kann Zugang zu der Empfangskomponente 301 für elektronische Post oder dem Mailclient, der Kommunikationskomponente 305 oder dem Web-Client, beispielsweise einem Browser, haben, die auf dem Kommunikationsterminal 205 oder dem Host, beispielsweise einem Personal Computer, einem PC oder einem Smartphone, laufen.

Der Benutzer oder der User kann sich bereits an der Kommunikationskomponente 305 oder dem Mailclient authentifiziert haben, entweder explizit durch Anmeldung oder Login, oder, wie bei vielen PC Systemen oder Smartphones möglich, implizit durch Anmeldung oder Login an dem Kommunikationsterminal 205 oder dem Host.

Die Kommunikationskomponente 305 oder der Browser und die Empfangskomponente 301 für elektronische Post oder der E-Mail-Client können je eine Komponente, beispielsweise ein Plugin wie die Authentifizierungskomponente 307 oder die Extraktionskomponente 303, haben, die jeweils mit der anderen kommunizieren kann.

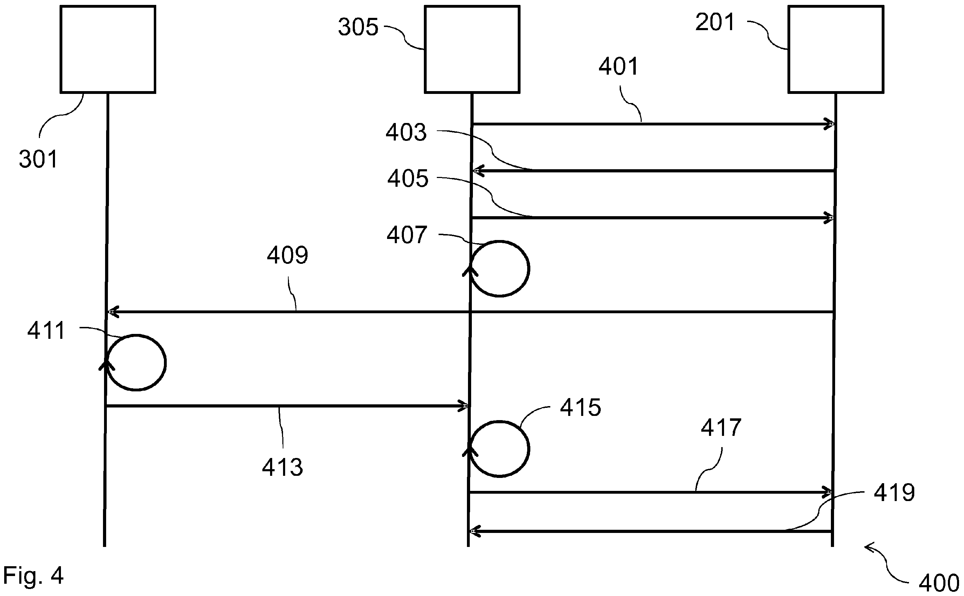

Fig. 4 zeigt ein schematisches Diagramm 400 eines Verfahrens zur automatischen Authentifizierung eines Benutzers gegenüber einem elektronischen Netzwerkdienst 201 unter Verwendung elektronischer Post gemäß einer Ausführungsform. Das Verfahren wird unter Verwendung der Empfangskomponente 301 für elektronische Post, der Kommunikationskomponente 305 und des elektronischen Netzwerkdienstes 201 durchgeführt. Ferner umfasst das Verfahren die Verfahrensschritte 401-419.

Das Verfahren beschreibt, wie der Benutzer oder der User sich nur mit Hilfe einer E-Mail-Adresse (EmailAddr), beispielsweise ohne Passwort, authentifizieren kann.

Der Verfahrensschritt 401 umfasst, dass der Benutzer oder der User mit der Kommunikationskomponente 305 oder dem Web-Client das Senden einer Eingabemaske oder der Login-Page durch den elektronischen Netzwerkdienst 201 oder den Webserver veranlasst, beispielsweise durch Senden des Kommandos "get login page" von der Kommunikationskomponente 305 oder dem Web-Client an den elektronischen Netzwerkdienst 201 oder den Webserver.

Der Verfahrensschritt 403 umfasst ein Senden der Eingabemaske oder der Login-Page durch den elektronischen Netzwerkdienst 201 oder den Webserver an die Kommunikationskomponente 305 oder den Webclient, beispielsweise durch das Kommando "send login page with TID". Hierbei umfasst die Eingabemaske oder die Login-Page ein Eingabefeld für eine Benutzerkennung oder die Userid, eine Verfahrenskennung oder ein Magic-Word, das kennzeichnet, dass das vorliegende Verfahren verwendet werden soll, und welches beispielsweise im HTML-Markup verborgen sein kann, aber nicht notwendig geheim sein muss, eine einmalige Transaktionskennung oder Transaktionsid (TID), welche beispielsweise im Markup verborgen sein kann, aber nicht notwendig geheim sein muss. Die Verfahrenskennung oder das Magic-Word und die Transaktionskennung oder TID können in einem HTML-Formular oder in einer HTML-Form als verstecktes Eingabefeld, beispielsweise als "hidden input", umfasst sein.

Der Verfahrensschritt 405 umfasst ein Eingeben der E-Mail-Adresse oder EmailAddr des Benutzers oder Users als Benutzerkennung oder Userid durch den Benutzer oder User. Die E-Mail-Adresse kann eine solche sein, zu der der Benutzer oder User mit Hilfe der Empfangskomponente 301 für elektronische Post oder des E-Mail-Clients Zugang hat, beispielsweise mittels der der Benutzer E-Mail-Nachrichten oder Emails empfangen kann. Anschließend sendet die Kommunikationskomponente 305 oder der Web-Client durch den Benutzer oder User veranlasst oder getriggert, beispielsweise indem der Benutzer oder User eine Schaltfläche zum Absenden oder einen Login-Knopf anklickt oder drückt, die Anmeldeanfrage oder den Login-Request an den elektronischen Netzwerkdienst 201 oder den Webserver, beispielsweise durch das Kommando "send login request with TID, EmailAddr".

Der Verfahrensschritt 407 umfasst ein Prüfen aller ausgehenden Anfragen oder Requests anhand einer Referenzverfahrenskennung oder des Magic-Words durch die Authentifizierungskomponente 307 oder das Web-Plugin, ob sie zum Verfahren gehören oder dem Verfahren zugeordnet sind. Wenn ja, kann die Authentifizierungskomponente 307 oder das Web-Plugin die E-Mail-Adresse oder EmailAddr und die Transaktionskennung oder TID abspeichern, beispielsweise durch das Kommando "store TID".

Der Verfahrensschritt 409 umfasst ein Empfangen oder Erhalten einer Anmeldeanfrage oder eines Login-Requests, welche oder welcher die E-Mail-Adresse oder EmailAddr und die Transaktionskennung oder TID umfasst, durch den elektronischen Netzwerkdienst 201 oder den Webserver. Anschließend veranlasst oder triggert der elektronische Netzwerkdienst 201 oder der Webserver die für dieses Verfahren zuständige Webserverkomponente oder Webapplikation, diesen wie folgt zu verarbeiten: die Webserverkomponente oder Webapplikation prüft mit Hilfe einer geeigneten Datenbank, ob die E-Mail-Adresse oder EmailAddr bekannt ist und für dieses Verfahren zugelassen ist. Wenn nein, schickt diee Webserverkomponente oder die Applikation eine Fehlermeldung an die Kommunikationskomponente 305 oder den Web-Client zurück. Wenn ja, geht es wie folgt weiter: die Webserverkomponente oder Webapplikation erzeugt einen Einmalschlüssel und speichert diesen zusammen mit der Transaktionskennung oder TID, der E-Mail-Adresse und optional einem Zeitstempel ab. Der Einmalschlüssel identifiziert die aktuelle Transaktion eindeutig. Die Webserverkomponente oder Webapplikation sendet eine E-Mail-Nachricht oder Email an die E-Mail-Adresse oder EmailAddr, beispielsweise über das Kommando "send email to EmailAddr with TID" vom elektronischen Netzwerkdienst 201 oder Webserver an die Empfangskomponente 301 für elektronische Post. Diese E-Mail-Nachricht oder Email umfasst in definierter, maschinenlesbarer Form, beispielsweise in XML, eine Verfahrenskennung oder ein Magic-Word, das die E-Mail-Nachricht oder Email als Teil des beschriebenen Verfahrens markiert, die Transaktionskennung oder TID und eine Netzwerkadresse des elektronischen Netzwerkdienstes 201 oder URL LoginUrl, die zum Anmelden oder Login verwendet werden kann. Diese enthält den Einmalschlüssel, beispielsweise eine langes Bitmuster oder einen langen Hex-String, den der Server für die Transaktionskennung oder TID einmalig als Anmeldedatum oder Login akzeptiert.

Der Verfahrensschritt 411 umfasst, dass die Extraktionskomponente 303 oder das E-Mail-Plugin mit Hilfe einer Referenzverfahrenskennung oder des Magic-Words alle eingehenden E-Mail-Nachrichten oder Emails herausfiltert, die zum Verfahren gehören. Diese E-Mail-Nachrichten oder Mails können für den Benutzer oder Mailuser unsichtbar bleiben. Beispielsweise können eingehende E-Mail-Nachrichten oder Mails erst von der Extraktionskomponente 303 oder vom Plugin überprüft oder gescannt werden und nicht betroffene E-Mail-Nachrichten oder Mails erst danach in den Posteingang zugestellt werden. Der Verfahrensschritt 411 kann das Kommando "extract TID, LoginUrl from email" umfassen.

Die Extraktionskomponente 303 oder das Email-Plugin arbeitet wie folgt: beim Start der Empfangskomponente 301 für elektronische Post oder des E-Mail-Clients registriert sich die Extraktionskomponente 303 oder das E-Mail-Plugin derart, dass es von der Empfangskomponente 301 für elektronische Post oder vom E-Mail-Client bei eingehenden E-Mail-Nachrichten oder Emails benachrichtigt wird. Geht eine E-Mail-Nachricht oder Email ein, kann folgendes geschehen: die Empfangskomponente 301 für elektronische Post oder der E-Mail-Client erkennt, dass die Extraktionskomponente 303 oder das E-Mail-Plugin über eingehende E-Mail-Nachrichten oder Emails benachrichtigt werden soll und übergibt die E-Mail-Nachricht oder Email an die Extraktionskomponente 303 oder das E-Mail-Plugin. Die Extraktionskomponente 303 oder das E-Mail-Plugin prüft, ob die E-Mail-Nachricht oder Email die Verfahrenskennung oder das Magic-Word umfasst, somit zum Verfahren gehört und daher von der Extraktionskomponente 303 oder vom E-Mail-Plugin zu verarbeiten ist. War die Überprüfung nicht erfolgreich, so antwortet die Extraktionskomponente 303 oder das E-Mail-Plugin der Empfangskomponente 301 für elektronische Post oder dem E-Mail-Client, dass die E-Mail-Nachricht oder die Email von der Extraktionskomponente 303 oder vom Email-Plugin ignoriert wurde. Die E-Mail-Nachricht oder Email wird dann von der Empfangskomponente 301 für elektronische Post oder vom E-Mail-Client weiter behandelt, als wäre die Extraktionskomponente 303 oder das E-Mail-Plugin nicht vorhanden. War die Überprüfung erfolgreich, so wird der Verfahrensschritt 413 ausgeführt.

Der Verfahrensschritt 411 umfasst ferner, dass die Extraktionskomponente 303 oder das Email-Plugin die Transaktionskennung oder TID und eine Netzwerkadresse des elektronischen Netzwerkdienstes 201 oder eine LoginUrl aus der E-Mail-Nachricht oder Email extrahiert. Falls dabei ein Fehler auftritt, kann der Verfahrensschritt 413 übersprungen werden.

Der Verfahrensschritt 413 umfasst, dass die Extraktionskomponente 303 oder das E-Mail-Plugin Verfahrenskennung oder TID und Netzwerkadresse des elektronischen Netzwerkdienstes 201 oder LoginUrl an die Authentifizierungskomponente 307 oder das Web-Plugin schickt. Die Extraktionskomponente 303 oder das E-Mail-Plugin meldet der Empfangskomponente 301 für elektronische Post oder dem E-Mail-Client, dass die E-Mail-Nachricht oder Email verarbeitet wurde und von der Empfangskomponente 301 für elektronische Post oder vom E-Mail-Client zu ignorieren ist. Die Empfangskomponente 301 für elektronische Post oder der E-Mail-Client ignoriert die E-Mail-Nachricht oder Email in dem Sinne, dass sie für den Benutzer oder User und andere Komponenten der Empfangskomponente 301 für elektronische Post oder andere E-Mail-Client Komponenten nicht mehr existiert. Der Verfahrensschritt 413 kann das Kommando "send TID, LoginUrl" umfassen.

Der Verfahrensschritt 415 umfasst, dass die Authentifizierungskomponente 307 oder das Web-Plugin in ihrer oder seiner Datenbank prüft, ob die Verfahrenskennung oder TID bekannt ist, beispielsweise durch das Kommando "lookup TID". War die Überprüfung erfolgreich, so wird der Verfahrensschritt 417 ausgeführt.

Der Verfahrensschritt 417 umfasst, dass die Authentifizierungskomponente 307 oder das Web-Plugin die Netzwerkadresse des elektronischen Netzwerkdienstes 201 oder die LoginUrl an die Kommunikationskomponente 305 oder den Web-Client schickt, die oder der die Netzwerkadresse des elektronischen Netzwerkdienstes 201 oder die LoginUrl öffnet, beispielsweise indem eine Anfrage oder ein Request mit der Netzwerkadresse des elektronischen Netzwerkdienstes 201 oder der LoginUrl an den elektronischen Netzwerkdienst 201 oder den Webserver geschickt wird. Dies kann beispielsweise durch das Kommando "send LoginUrl" realisiert werden.

Der Verfahrensschritt 419 umfasst, dass der elektronische Netzwerkdienst 201 oder Webserver die Netzwerkadresse des elektronischen Netzwerkdienstes 201 oder die LoginUrl erhält und die zuständige Webserverkomponente oder Webapplikation veranlasst oder triggert, die Netzwerkadresse des elektronischen Netzwerkdienstes 201 oder die LoginUrl wie folgt zu verarbeiten: die Webserverkomponente oder Webapplikation extrahiert den Einmalschlüssel aus der Netzwerkadresse des elektronischen Netzwerkdienstes 201 oder der LoginUrl und sucht diesen in der Datenbank. Wird er mit dazugehörigem Zeitstempel und Transaktionskennung oder TID gefunden, dann macht die Webserverkomponente oder Webapplikation folgendes: sie überprüft anhand des Zeitstempels ob der Anmelde oder Login Versuch noch aktuell ist. Sie überprüft, ob die Transaktionskennung oder TID aus der Netzwerkadresse des elektronischen Netzwerkdienstes 201 oder der LoginUrl zur gefundenen Transaktionskennung TID passt. Sie markiert den dazugehörenden Benutzer oder User als authentifiziert oder eingeloggt. Sie markiert den Einmalschlüssel und dazugehörende Einträge in der Datenbank als erledigt oder löscht diese. Sie schickt der Kommunikationskomponente 305 oder dem Web-Client eine Antwortseite, die den Benutzer oder User über die erfolgreiche Anmeldung oder den erfolgreichen Login informiert. Dies kann beispielsweise durch das Kommando "send login reply" durchgeführt werden.

In allen anderen Fällen schickt die Webserverkomponente oder Webapplikation eine Antwortseite mit einer Fehlermeldung an den die Kommunikationskomponente 305 oder den Webclient, die eine ungültige Netzwerkadresse des elektronischen Netzwerkdienstes 201 oder URL oder einen ungültigen Anmelde oder Login Versuch anzeigt. Dies kann beispielsweise durch das Kommando "send login reply" durchgeführt werden.

Gemäß einer weiteren Ausführungsform kann der elektronische Netzwerkdienst 201 oder der Webserver mit der Transaktionskennung oder TID optional einen Zeitstempel oder Timestamp abspeichern, um beispielsweise eine Zeitsperre oder einen Timeout zu realisieren. Eine Zeitsperre oder ein Timeout kann optional im Verfahrensschritt 403 vom elektronischen Netzwerkdienst 201 oder Webserver mitgeschickt werden. Eine Zeitsperre oder ein Timeout ist der Zeitpunkt, bis zu dem der elektronische Netzwerkdienst 201 oder der Webserver einen Anmeldeversuch oder Loginversuch mit der Transaktionskennung oder TID akzeptiert. Die Zeitsperre oder der Timeout kann von der Kommunikationskomponente 305 oder vom Web-Client genutzt werden, um veraltete Transaktionskennungen oder TID Einträge zu löschen. Die Zeitsperre oder der Timeout kann während einer vorbestimmten Zeitspanne aktiv sein.

Gemäß einer weiteren Ausführungsform kann dem Benutzer oder User eine Rückmeldung oder ein Feedback gegeben werden, falls die Kommunikationskomponente 305 oder der Web-Client im Verfahrensschritt 415 keine Transaktionskennung oder TID oder eine veraltete Transaktionskennung oder TID, wie beispielsweise durch eine Zeitsperre oder einen Timeout, findet. Dazu kann die Kommunikationskomponente 305 oder der Web-Client eine in der Authentifizierungskomponente 307 oder im Plugin eingebaute Seite mit der Meldung anzeigen.

Gemäß einer weiteren Ausführungsform schickt der elektronische Netzwerkdienst 201 oder Webserver in der Email-Nachricht oder Email im Verfahrensschritt 409 zusätzlich eine Netzwerkadresse für Fehler oder eine Fehler-URL.

Gemäß einer weiteren Ausführungsform speichert die Kommunikationskomponente 305 oder der Web-Client im Verfahrensschritt 407 die Netzwerkadresse für Fehler oder die Fehler-URL mit ab und sendet diese im Fehlerfalle im Verfahrensschritt 417 an den elektronischen Netzwerkdienst 201 oder Webserver zurück.

Gemäß einer weiteren Ausführungsform kann angenommen werden, dass der Benutzer oder User an der Empfangskomponente 301 für elektronische Post oder am E-Mail-Client angemeldet oder eingeloggt ist. Stellt die Empfangskomponente 301 für elektronische Post oder der E-Mail-Client nach dem Erhalt der Nachricht aus dem Verfahrensschritt 409 oder nach Erhalt des Verfahrensschrittes 409 fest, dass der Benutzer oder User nicht angemeldet oder eingeloggt ist, führt er vor dem Verfahrensschritt 411 zunächst die Authentifizierung des Benutzers oder Users durch.

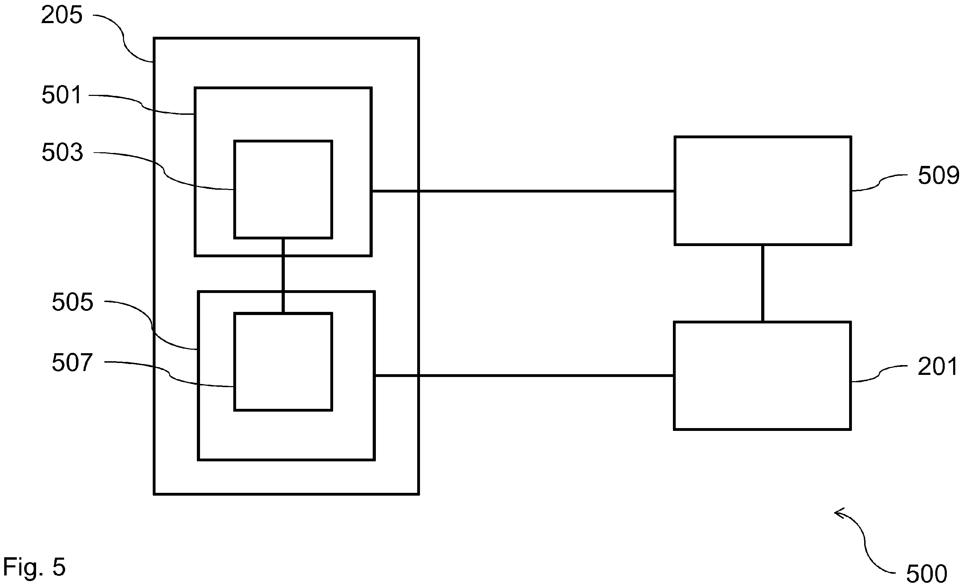

Fig. 5 zeigt ein schematisches Diagramm eines Authentifizierungsszenarios 500 zur automatischen Authentifizierung eines Benutzers gegenüber einem elektronischen Netzwerkdienst 201 unter Verwendung einer Kurznachricht gemäß einer Ausführungsform.

Das Authentifizierungsszenario 500 umfasst den elektronischen Netzwerkdienst 201, das Kommunikationsterminal 205 und die Sendekomponente 509 für Kurznachrichten. Ferner umfasst das Kommunikationsterminal 205 eine Empfangskomponente 501 für Kurznachrichten, welche eine Extraktionskomponente 503 umfasst. Das Kommunikationsterminal 205 umfasst ferner eine Kommunikationskomponente 505, welche eine Authentifizierungskomponente 507 umfasst.

Der elektronische Netzwerkdienst 201 ist mit der Sendekomponente 509 für Kurznachrichten und der Kommunikationskomponente 505 verbunden. Ferner ist die Sendekomponente 509 für Kurznachrichten mit der Empfangskomponente 501 für Kurznachrichten verbunden. Weiter ist die Extraktionskomponente 503 mit der Authentifizierungskomponente 507 verbunden.

Das Kommunikationsterminal 205 kann ein Personal Computer, ein Telefon, ein Mobiltelefon oder ein Smartphone sein. Die Sendekomponente 509 für Kurznachrichten kann ein SMS-Service sein. Die Kurznachricht kann eine SMS-Nachricht oder SMS umfassen. Die Empfangskomponente 501 für Kurznachrichten kann ein Telefon oder SMS-Client sein. Die Extraktionskomponente 503 kann ein SMS-Plugin oder ein Plugin des SMS-Clients sein. Die Kommunikationskomponente 505 kann ein Web-Client sein. Die Authentifizierungskomponente 507 kann ein Web-Plugin oder ein Plugin des Web-Clients sein.

Der Benutzer oder der User kann Zugang zu der Empfangskomponente 501 für Kurznachrichten oder einem Telefon, das SMS-Nachrichten oder SMS empfangen kann, und einer Kommunikationskomponente 505 oder einem Web-Client, beispielsweise einem Browser, haben, die oder der direkt mit der Empfangskomponente 501 für Kurznachrichten oder SMS-Komponente des Telefons, beispielsweise dem SMS-Client, oder Client kommunizieren kann. Gemäß einer weiteren Ausführungsform können die Empfangskomponente 501 für Kurznachrichten oder der SMS-Client und die Kommunikationskomponente 505 auf demselben Telefon, beispielsweise dem Kommunikationsterminal 205 oder Host, welches oder welcher ein Smartphone sein kann, laufen.

Der Benutzer oder der User kann sich bereits an dem Kommunikationsterminal 205, der Empfangskomponente 501 für Kurznachrichten oder dem Telefon authentifiziert haben.

Die Kommunikationskomponente 505 oder der Web-Client und die Empfangskomponente 501 für Kurznachrichten oder der SMS-Client können je eine Komponente, beispielsweise ein Plugin wie die Authentifizierungskomponente 507 oder die Extraktionskomponente 503, haben, die jeweils mit der anderen kommunizieren kann.

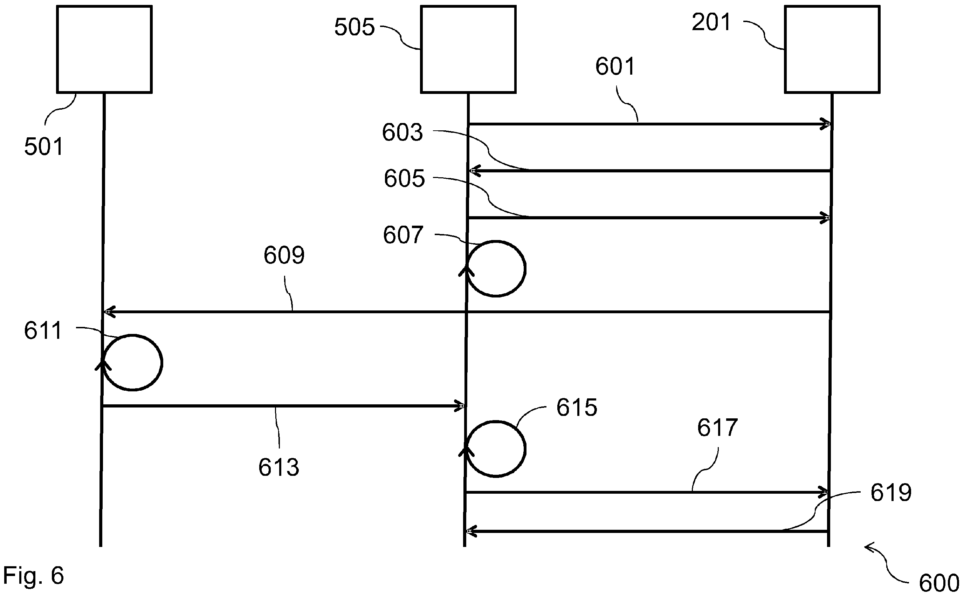

Fig. 6 zeigt ein schematisches Diagramm 600 eines Verfahrens zur automatischen Authentifizierung eines Benutzers gegenüber einem elektronischen Netzwerkdienst 201 unter Verwendung einer Kurznachricht gemäß einer Ausführungsform. Das Verfahren wird unter Verwendung der Empfangskomponente 501 für Kurznachrichten, der Kommunikationskomponente 505 und des elektronischen Netzwerkdienstes 201 durchgeführt. Ferner umfasst das Verfahren die Verfahrensschritte 601-619.

Das Verfahren beschreibt, wie der Benutzer oder der User sich nur mit Hilfe seiner Anschlussnummer, Rufnummer oder MSISDN, beispielsweise ohne Passwort, authentifizieren kann.

Der Verfahrensschritt 601 umfasst, dass der Benutzer oder der User mit der Kommunikationskomponente 505 oder dem Web-Client das Senden einer Eingabemaske oder der Login-Page durch den elektronischen Netzwerkdienst 201 oder den Webserver veranlasst, beispielsweise durch Senden des Kommandos "get login page" von der Kommunikationskomponente 505 oder dem Web-Client an den elektronischen Netzwerkdienst 201 oder den Webserver.

Der Verfahrensschritt 603 umfasst ein Senden der Eingabemaske oder der Login-Page durch den elektronischen Netzwerkdienst 201 oder den Webserver an die Kommunikationskomponente 505 oder den Webclient, beispielsweise durch das Kommando "send login page with TID". Hierbei umfasst die Eingabemaske oder die Login-Page ein Eingabefeld für eine Benutzerkennung oder eine Userid, eine Verfahrenskennung oder ein Magic-Word, das kennzeichnet, dass das vorliegende Verfahren verwendet werden soll, und welches beispielsweise im HTML-Markup verborgen sein kann aber nicht notwendig geheim sein muss, und eine einmalige Transaktionskennung oder Transaktionsid (TID), welche beispielsweise im Markup verborgen sein kann aber nicht notwendig geheim sein muss. Die Verfahrenskennung oder das Magic-Word und die Transaktionskennung oder TID können in einem HTML-Formular oder in einer HTML Form als verstecktes Eingabefeld, beispielsweise als "hidden input", umfasst sein.

Der Verfahrensschritt 605 umfasst ein Eingeben der Anschlussnummer oder Rufnummer oder MSISDN des Benutzers oder Users als Benutzerkennung oder Userid durch den Benutzer oder User. Die Anschlussnummer oder MSISDN kann eine solche sein, zu der der Benutzer oder User mit Hilfe der Empfangskomponente 501 für Kurznachrichten oder des SMS-Clients Zugang hat, beispielsweise für die der Benutzer SMS-Nachrichten oder SMS empfangen kann. Anschließend sendet die Kommunikationskomponente 505 oder der Web-Client durch den Benutzer oder User veranlasst oder getriggert, beispielsweise indem der Benutzer oder User eine Schaltfläche zum Absenden oder einen Login-Knopf anklickt oder drückt, die Anmeldeanfrage oder den Login-Request an den elektronischen Netzwerkdienst 201 oder den Webserver, beispielsweise durch das Kommando "send login request with TID, MSISDN".

Der Verfahrensschritt 607 umfasst ein Prüfen aller ausgehenden Anfragen oder Requests anhand einer Referenzverfahrenskennung oder des Magic-Words durch die Authentifizierungskomponente 507 oder das Web-Plugin, ob sie zum Verfahren gehören. Wenn ja, kann die Authentifizierungskomponente 507 oder das Web-Plugin die Anschlussnummer oder MSISDN und die Transaktionskennung oder TID abspeichern, beispielsweise durch das Kommando "store TID".

Der Verfahrensschritt 609 umfasst ein Empfangen oder Erhalten einer Anmeldeanfrage oder eines Login-Requests, welche oder welcher die Anschlussnummer oder MSISDN und die Transaktionskennung oder TID umfasst, durch den elektronischen Netzwerkdienst 201 oder den Webserver. Anschließend veranlasst oder triggert der elektronische Netzwerkdienst 201 oder der Webserver die für dieses Verfahren zuständige Webserverkomponente oder Webapplikation, diesen wie folgt zu verarbeiten: die Webserverkomponente oder Webapplikation prüft mit Hilfe einer geeigneten Datenbank, ob die Anschlussnummer oder MSISDN bekannt ist und für dieses Verfahren zugelassen ist. Wenn nein, schickt die Webserverkomponente oder die Applikation eine Fehlermeldung an die Kommunikationskomponente 505 oder den Web-Client zurück. Wenn ja, geht es wie folgt weiter: die Webserverkomponente oder Webapplikation erzeugt einen Einmalschlüssel und speichert diesen zusammen mit der Transaktionskennung oder TID, der Anschlussnummer oder SMS-Nachricht oder SMS und optional einem Zeitstempel ab. Der Einmalschlüssel identifiziert die aktuelle Transaktion eindeutig. Die Webserverkomponente oder Webapplikation sendet mit Hilfe der Sendekomponente 509 für Kurznachrichten oder des SMS-Service eine SMS-Nachricht oder SMS an die Anschlussnummer oder MSISDN, beispielsweise über das Kommando "send SMS to MSISDN with TID" vom elektronischen Netzwerkdienst 201 oder Webserver an die Empfangskomponente 501 für Kurznachrichten. Diese SMS-Nachricht oder SMS enthält in definierter, maschinenlesbarer Form, beispielsweise in XML, eine Verfahrenskennung oder ein Magic-Word, das die SMS-Nachricht oder SMS als Teil des beschriebenen Verfahrens markiert, die Transaktionskennung oder TID und eine Netzwerkadresse des elektronischen Netzwerkdienstes 201 oder URL "LoginUrl", die zum Anmelden oder Login verwendet werden kann. Diese umfasst den Einmalschlüssel, beispielsweise eine langes Bitmuster oder einen langen Hex-String, den der Server für die Transaktionskennung oder TID einmalig als Anmeldedatum oder Login akzeptiert.

Der Verfahrensschritt 611 umfasst, dass die Extraktionskomponente 503 oder das SMS-Plugin mit Hilfe einer Referenzverfahrenskennung oder des Magic-Words alle eingehenden SMS-Nachrichten oder SMS herausfiltert, die zum Verfahren gehören. Diese SMS-Nachrichten oder SMS können für den Benutzer oder SMS-Nutzer unsichtbar bleiben. Beispielsweise können eingehende SMS-Nachrichten oder SMS erst von der Extraktionskomponente 503 oder vom Plugin überprüft oder gescannt werden und nicht betroffene SMS-Nachrichten oder SMS erst danach in den Posteingang zugestellt werden. Der Verfahrensschritt 611 kann das Kommando "extract TID, LoginUrl from SMS" umfassen.

Die Extraktionskomponente 503 oder das SMS-Plugin arbeitet wie folgt: beim Start der Empfangskomponente 501 für Kurznachrichten oder des SMS-Clients registriert sich die Extraktionskomponente 503 oder das SMS-Plugin derart, dass es von der Empfangskomponente 501 für Kurznachrichten oder vom SMS-Client bei eingehenden SMS-Nachrichten oder SMS benachrichtigt wird. Geht eine SMS-Nachricht oder SMS ein, geschieht folgendes: die Empfangskomponente 501 für Kurznachrichten oder der SMS-Client erkennt, dass die Extraktionskomponente 503 oder das SMS-Plugin über eingehende SMS-Nachrichten oder SMS benachrichtigt werden soll und übergibt die SMS-Nachricht oder SMS an die Extraktionskomponente 503 oder das SMS-Plugin. Die Extraktionskomponente 503 oder das SMS-Plugin prüft, ob die SMS-Nachricht oder SMS die Verfahrenskennung oder das Magic-Word umfasst, somit zum Verfahren gehört und daher von der Extraktionskomponente 503 oder vom SMS-Plugin zu verarbeiten ist. War die Überprüfung nicht erfolgreich, so antwortet die Extraktionskomponente 503 oder das SMS-Plugin der Empfangskomponente 501 für Kurznachrichten oder dem SMS-Client, dass die SMS-Nachricht oder die SMS von der Extraktionskomponente 503 oder vom SMS-Plugin ignoriert wurde. Die SMS-Nachricht oder SMS wird dann von der Empfangskomponente 501 für Kurznachrichten oder vom SMS-Client weiter behandelt, als wäre die Extraktionskomponente 503 oder das SMS-Plugin nicht vorhanden. War die Überprüfung erfolgreich, so wird der Verfahrensschritt 613 ausgeführt.

Der Verfahrensschritt 611 umfasst ferner, dass die Extraktionskomponente 503 oder das SMS-Plugin die Transaktionskennung oder TID und eine Netzwerkadresse des elektronischen Netzwerkdienstes 201 oder eine LoginUrl aus der SMS-Nachricht oder SMS extrahiert. Falls dabei ein Fehler auftritt, kann der Verfahrensschritt 613 übersprungen werden.

Der Verfahrensschritt 613 umfasst, dass die Extraktionskomponente 503 oder das SMS-Plugin Verfahrenskennung oder TID und Netzwerkadresse des elektronischen Netzwerkdienstes 201 oder LoginUrl an die Authentifizierungskomponente 507 oder das Web-Plugin schickt. Die Extraktionskomponente 503 oder das SMS-Plugin meldet der Empfangskomponente 501 für Kurznachrichten oder dem SMS-Client, dass die SMS-Nachricht oder SMS verarbeitet wurde und von der Empfangskomponente 501 für Kurznachrichten oder vom SMS-Client zu ignorieren ist. Die Empfangskomponente 501 für Kurznachrichten oder der SMS-Client ignoriert die SMS-Nachricht oder SMS in dem Sinne, dass sie für den Benutzer oder User und andere Komponenten der Empfangskomponente 501 für Kurznachrichten oder andere SMS-Client Komponenten nicht mehr existiert. Der Verfahrensschritt 613 kann das Kommando "send TID, LoginUrl" umfassen.

Der Verfahrensschritt 615 umfasst, dass die Authentifizierungskomponente 507 oder das Web-Plugin in ihrer oder seiner Datenbank prüft, ob die Verfahrenskennung oder TID bekannt ist, beispielsweise durch das Kommando "lookup TID". War die Überprüfung erfolgreich, so wird der Verfahrensschritt 617 ausgeführt.

Der Verfahrensschritt 617 umfasst, dass die Authentifizierungskomponente 507 oder das Web-Plugin die Netzwerkadresse des elektronischen Netzwerkdienstes 201 oder die LoginUrl an die Kommunikationskomponente 505 oder den Web-Client schickt, die oder der die Netzwerkadresse des elektronischen Netzwerkdienstes 201 oder die LoginUrl öffnet, beispielsweise indem eine Anfrage oder ein Request mit der Netzwerkadresse des elektronischen Netzwerkdienstes 201 oder der LoginUrl an den elektronischen Netzwerkdienst 201 oder den Webserver geschickt wird. Dies kann beispielsweise durch das Kommando "send LoginUrl" realisiert werden.

Der Verfahrensschritt 619 umfasst, dass der elektronische Netzwerkdienst 201 oder Webserver die Netzwerkadresse des elektronischen Netzwerkdienstes 201 oder die LoginUrl erhält und die zuständige Webserverkomponente oder Webapplikation veranlasst oder triggert, die Netzwerkadresse des elektronischen Netzwerkdienstes 201 oder die LoginUrl wie folgt zu verarbeiten: die Webserverkomponente oder Webapplikation extrahiert den Einmalschlüssel aus der Netzwerkadresse des elektronischen Netzwerkdienstes 201 oder der LoginUrl und sucht diesen in der Datenbank. Wird er mit dazugehörigem Zeitstempel und Transaktionskennung oder TID gefunden, dann macht die Webserverkomponente oder Webapplikation folgendes: sie überprüft anhand des Zeitstempels ob der Anmelde oder Login Versuch noch aktuell ist. Sie überprüft, ob die Transaktionskennung oder TID aus der Netzwerkadresse des elektronischen Netzwerkdienstes 201 oder der LoginUrl zur gefundenen Transaktionskennung TID passt. Sie markiert den dazugehörenden Benutzer oder User als authentifiziert oder eingeloggt. Sie markiert den Einmalschlüssel und dazugehörende Einträge in der Datenbank als erledigt oder löscht diese. Sie schickt der Kommunikationskomponente 505 oder dem Web-Client eine Antwortseite, die den Benutzer oder User über die erfolgreiche Anmeldung oder den erfolgreichen Login informiert. Dies kann beispielsweise durch das Kommando "send login reply" durchgeführt werden.

In allen anderen Fällen schickt die Webserverkomponente oder Webapplikation eine Antwortseite mit einer Fehlermeldung an die Kommunikationskomponente 505 oder den Webclient, die eine ungültige Netzwerkadresse des elektronischen Netzwerkdienstes 201 oder URL oder einen ungültigen Anmelde- oder Login-Versuch anzeigt. Dies kann beispielsweise durch das Kommando "send login reply" durchgeführt werden.

Gemäß einer weiteren Ausführungsform kann der elektronische Netzwerkdienst 201 oder der Webserver mit der Transaktionskennung oder TID optional einen Zeitstempel oder Timestamp abspeichern, um beispielsweise eine Zeitsperre oder einen Timeout zu realisieren. Eine Zeitsperre oder ein Timeout kann optional im Verfahrensschritt 603 vom elektronischen Netzwerkdienst 201 oder Webserver mitgeschickt werden. Eine Zeitsperre oder ein Timeout ist der Zeitpunkt, bis zu dem der elektronische Netzwerkdienst 201 oder der Webserver einen Anmeldeversuch oder Loginversuch mit der Transaktionskennung oder TID akzeptiert. Die Zeitsperre oder der Timeout kann von der Kommunikationskomponente 505 oder vom Web-Client genutzt werden, um veraltete Transaktionskennungen oder TID Einträge zu löschen. Die Zeitsperre oder der Timeout kann während einer vorbestimmten Zeitspanne aktiv sein.

Gemäß einer weiteren Ausführungsform kann dem Benutzer oder User eine Rückmeldung oder ein Feedback gegeben werden, falls die Kommunikationskomponente 505 oder der Web-Client im Verfahrensschritt 615 keine Transaktionskennung oder TID oder eine veraltete Transaktionskennung oder TID, wie beispielsweise durch eine Zeitsperre oder einen Timeout, findet. Dazu kann die Kommunikationskomponente 505 oder der Web-Client eine in der Authentifizierungskomponente 507 oder im Plugin eingebaute Seite mit der Meldung anzeigen.

Gemäß einer weiteren Ausführungsform schickt der elektronische Netzwerkdienst 201 oder Webserver in der SMS-Nachricht oder SMS im Verfahrensschritt 609 zusätzlich eine Netzwerkadresse für Fehler oder eine Fehler-URL.

Gemäß einer weiteren Ausführungsform speichert die Kommunikationskomponente 505 oder der Web-Client im Verfahrensschritt 607 die Netzwerkadresse für Fehler oder die Fehler-URL mit ab und sendet diese im Fehlerfalle im Verfahrensschritt 617 an den elektronischen Netzwerkdienst 201 oder Webserver zurück.

Gemäß einer weiteren Ausführungsform greift der elektronische Netzwerkdienst 201 oder die Webapplikation zum Versenden der SMS-Nachricht oder SMS auf eine Sendekomponente 509 für Kurznachrichten oder einen SMS-Service zurück. Diese oder dieser kann beispielsweise dadurch realisiert werden, dass der elektronische Netzwerkdienst 201 oder Serviceanbieter direkt einen Zugang zu einer Sendekomponente 509 für Kurznachrichten oder einem Short Message Service Center (SMSC) eines Netzbetreibers hat.

Gemäß einer weiteren Ausführungsform erfolgt das Rücksetzen von Passwörtern mittels einer E-Mail-Nachricht oder Email. Der Benutzer oder User gibt statt Benutzerkennung oder Userid und Passwort die Benutzerkennung oder Userid und eine E-Mail-Adresse an, und der elektronische Netzwerkdienst 201 oder Service schickt dann per E-Mail-Nachricht oder Email ein neues Passwort oder beispielsweise eine Netzwerkadresse oder URL zum Rücksetzen des Passworts an den Benutzer oder User.

Gemäß einer weiteren Ausführungsform kann ein Anmelden oder Einloggen mittels einer E-Mail-Nachricht oder Email erlaubt oder ermöglicht werden, beispielsweise indem nur die Eingabe von Benutzerkennung oder Userid und E-Mail-Adresse angefordert wird und per E-Mail-Nachricht oder Mail eine Netzwerkadresse oder URL, mit der sich der Benutzer anmelden oder einloggen kann, geschickt wird. Gemäß einer weiteren Ausführungsform kann das Verfahren anstatt mit einem Schritt, beispielsweise direktes Anmelden oder direkter Login mittels Benutzerkennung oder Userid und Passwort, mittels dreier Schritte durchgeführt werden: eine Eingabe von Benutzerkennung oder Userid und E-Mail-Adresse, ein Durchsuchen der eigenen E-Mail-Nachrichten oder Emails nach der passenden Netzwerkadresse des elektronischen Netzwerkdienstes 201 oder LoginUrl, und einer Eingabe dieser Netzwerkadresse des elektronischen Netzwerkdienstes 201 oder URL in die Kommunikationskomponente 305 oder den Web-Client.

Gemäß einer weiteren Ausführungsform kann der Benutzer oder Nutzer eine Anschlussnummer oder Rufnummer, beispielsweise eine Mobilrufnummer, beim elektronischen Netzwerkdienst 201 oder Serviceanbieter hinterlegen. Dabei kann die Möglichkeit bereitgestellt werden, das Passwort per SMS-Nachricht oder SMS zurückzusetzen. Der Benutzer oder User gibt anstatt Benutzerkennung oder Userid und Passwort die Benutzerkennung oder Userid und die Anschlussnummer oder Rufnummer an, und der elektronische Netzwerkdienst 201 oder Service schickt dann per SMS-Nachricht oder SMS ein neues Passwort oder beispielsweise eine Netzwerkadresse oder URL zum Rücksetzen des Passworts an den Benutzer oder User.

Gemäß einer weiteren Ausführungsform kann ein Anmelden oder Einloggen mittels Anschlussnummer oder Rufnummer erlaubt oder ermöglicht werden, beispielsweise indem nur die Eingabe von Benutzerkennung oder Userid und Anschlussnummer oder Rufnummer angefordert wird und per SMS-Nachricht oder SMS ein neues Passwort, mit dem sich der Benutzer anmelden oder einloggen kann, geschickt wird. Gemäß einer weiteren Ausführungsform kann das Verfahren anstatt mit einem Schritt, beispielsweise direktes Anmelden oder direkter Login mittels Benutzerkennung oder Userid und Passwort, mittels dreier Schritte durchgeführt werden: eine Eingabe von Benutzerkennung oder Userid und Anschlussnummer oder Rufnummer, ein Durchsuchen der eingehenden SMS-Nachrichten oder SMS nach der passenden SMS-Nachricht oder SMS, und einer Eingabe des Passworts in die Kommunikationskomponente 305 oder den Web-Client.

### BEZUGSZEICHENLISTE

- 100: Verfahren zur automatischen Authentifizierung eines Benutzers
- 101: Übermitteln der Netzwerkadresse des Benutzers
- 103: Senden einer Nachricht
- 105: Automatisches Extrahieren der Authentifizierungsdaten
- 107: Automatisches Authentifizieren des Benutzers

- 200: Authentifizierungsszenario
- 201: Elektronischer Netzwerkdienst
- 203: Kommunikationsnetzwerk
- 205: Kommunikationsterminal

- 300: Authentifizierungsszenario
- 301: Empfangskomponente für elektronische Post
- 303: Extraktionskomponente
- 305: Kommunikationskomponente
- 307: Authentifizierungskomponente
- 309: Sendekomponente für elektronische Post

- 400: Diagramm
- 401-419: Verfahrensschritte

- 500: Authentifizierungsszenario
- 501: Empfangskomponente für Kurznachrichten
- 503: Extraktionskomponente
- 505: Kommunikationskomponente
- 507: Authentifizierungskomponente
- 509: Sendekomponente für Kurznachrichten

- 600: Diagramm
- 601-619: Verfahrensschritte

## Patentansprüche

1. Verfahren (100) zur automatischen Authentifizierung eines Benutzers gegenüber einem elektronischen Netzwerkdienst (201) mittels einer Netzwerkadresse des Benutzers, mit:
Übermitteln (101) der Netzwerkadresse des Benutzers mittels eines Kommunikationsterminals (205) des Benutzers an den elektronischen Netzwerkdienst (201) über ein Kommunikationsnetzwerk (203);
Senden (103) einer Nachricht, welche Authentifizierungsdaten des Benutzers umfasst, an die übermittelte Netzwerkadresse durch den elektronischen Netzwerkdienst (201) über das Kommunikationsnetzwerk (203), wobei die Nachricht als Antwort auf das Übermitteln (101) der Netzwerkadresse gesendet wird;
automatischem Extrahieren (105) der Authentifizierungsdaten des Benutzers aus der empfangenen Nachricht durch das Kommunikationsterminal (205); und
automatischem Authentifizieren (107) des Benutzers gegenüber dem elektronischen Netzwerkdienst (201) unter Verwendung der extrahierten Authentifizierungsdaten des Benutzers durch das Kommunikationsterminal (205),
wobei die Nachricht eine HTML Form umfasst, die eine Verfahrenskennung, welche dem Verfahren (100) zur automatischen Authentifizierung zugeordnet ist, umfasst, und wobei die HTML Form eine Eingabemaske oder Login-Page umfasst, wobei die Verfahrenskennung als verstecktes Eingabefeld in der HTML Form realisiert ist.

2. Verfahren (100) nach Anspruch 1, wobei die Netzwerkadresse eine der folgenden Netzwerkadressen ist:
- eine Adresse für den elektronischen Postverkehr; oder
- eine Anschlussnummer, welche einem Telefonanschluss, insbesondere einem mobilen Telefonanschluss, zugeordnet ist.

3. Verfahren (100) nach einem der vorangehenden Ansprüche, wobei die übermittelte Netzwerkadresse durch den elektronischen Netzwerkdienst (201) mit vorgespeicherten Netzwerkadressen verglichen wird, um eine Zugriffsberechtigung des Benutzers zu überprüfen.

4. Verfahren (100) nach einem der vorangehenden Ansprüche, wobei die automatische Authentifizierung des Benutzers durch den elektronischen Netzwerkdienst (201) nach Ablauf einer vorbestimmten Zeitspanne nach dem Übermitteln der Netzwerkadresse automatisch abgelehnt wird, falls keine automatische Authentifizierung erfolgte.

5. Verfahren (100) nach einem der vorangehenden Ansprüche, wobei durch den elektronischen Netzwerkdienst (201) die Eingabemaske für die Eingabe der Netzwerkadresse bereitgestellt oder übermittelt wird.

6. Verfahren (100) nach einem der vorangehenden Ansprüche, wobei die Authentifizierungsdaten zumindest eines der folgenden Daten umfassen:
- die Verfahrenskennung, welche dem Verfahren (100) zur automatischen Authentifizierung zugeordnet ist, um die Ausführung des Verfahrens (100) durch einen Vergleich der Verfahrenskennung mit einer vorgespeicherten Referenzverfahrenskennung zu erkennen;
- die Netzwerkadresse des Benutzers, um die Authentifizierungsdaten dem Benutzer zuzuordnen;
- eine Transaktionskennung, um die Authentifizierungsdaten durch Vergleich der Transaktionskennung mit Referenztransaktionskennungen einem Authentifizierungsvorgang zuzuordnen; und
- ein Passwort, insbesondere einen Einmalschlüssel, um den Benutzer durch ein Übermitteln des Passworts an den elektronischen Netzwerkdienst (201) gegenüber diesem zu authentifizieren.

7. Verfahren (100) nach einem der vorangehenden Ansprüche, wobei die Authentifizierungsdaten mit Referenzdaten verglichen werden, um die Ausführung des Verfahrens (100) zu erkennen.

8. Verfahren (100) nach einem der vorangehenden Ansprüche, wobei eine Anzeige der Nachricht, mittels welcher die Authentifizierungsdaten übermittelt werden, gegenüber dem Benutzer unterbunden wird.

9. Verfahren (100) nach einem der vorangehenden Ansprüche, wobei die Nachricht ferner eine Transaktionskennung umfasst und wobei die Transaktionskennung aus der Nachricht extrahiert und mit einer Referenztransaktionskennung verglichen wird, um die Authentizität der Nachricht zu überprüfen.

10. Verfahren (100) nach einem der vorangehenden Ansprüche, wobei die Nachricht eine Transaktionskennung und ein Passwort, insbesondere einen Einmalschlüssel, umfasst und wobei die Transaktionskennung und das Passwort aus der Nachricht extrahiert und an den elektronischen Netzwerkdienst (201) übermittelt werden, um den Benutzer gegenüber dem elektronischen Netzwerkdienst (201) zu authentifizieren.

11. Verfahren (100) nach Anspruch 10, wobei die übermittelte Transaktionskennung durch den elektronischen Netzwerkdienst (201) mit Referenztransaktionskennungen verglichen wird, um die Authentifizierung des Benutzers zu überprüfen.

12. Verfahren (100) nach Anspruch 10 oder 11, wobei das übermittelte Passwort durch den elektronischen Netzwerkdienst (201) mit Referenzpasswörtern verglichen wird, um die Authentifizierung des Benutzers zu überprüfen.

13. Verfahren (100) nach einem der vorangehenden Ansprüche, wobei die Nachricht ferner eine Netzwerkadresse des elektronischen Netzwerkdienstes (201) umfasst und wobei die Netzwerkadresse des elektronischen Netzwerkdienstes (201) aus der Nachricht extrahiert wird, um den Benutzer durch Aufruf der Netzwerkadresse des elektronischen Netzwerkdienstes (201) gegenüber dem elektronischen Netzwerkdienst (201) zu authentifizieren.

14. Verfahren (100) nach Anspruch 13, wobei in der Netzwerkadresse des elektronischen Netzwerkdienstes (201) ein Passwort, insbesondere ein Einmalschlüssel, integriert ist und wobei das Passwort durch den elektronischen Netzwerkdienst (201) aus der Netzwerkadresse des elektronischen Netzwerkdienstes (201) extrahiert und mit einem Referenzpasswort verglichen wird, um die Authentifizierung des Benutzers zu überprüfen.

## Claims

1. Method (100) for automatically authenticating a user towards an electronic network service (201) by means of a network address of the user, involving:
transmitting (101) the network address of the user by means of a communication terminal (205) of the user to the electronic network service (201) via a communication network (203);
sending (103) a message comprising authentication data of the user to the transmitted network address by means of the electronic network service (201) via the communication network (203), wherein the message is sent in response to the transmitting (101) of the network address;
automatically extracting (105) the authentication data of the user from the received message by means of the communication terminal (205); and
automatically authenticating (107) the user towards the electronic network service (201) by using the extracted authentication data of the user by means of the communication terminal (205),
wherein the message comprises an HTML form comprising a method identifier associated with the method (100) for automatic authentication, and wherein the HTML form comprises an input mask or login page, wherein the method identifier is realized as a hidden input field in the HTML form.

2. Method (100) according to Claim 1, wherein the network address is one of the following network addresses:
- an address for the electronic mail traffic; or
- a subscriber's number associated with a telephone line, in particular a mobile telephone line.

3. Method (100) according to either of the preceding claims, wherein the transmitted network address is compared with previously stored network addresses by the electronic network service (201) in order to check an access authorization of the user.

4. Method (100) according to one of the preceding claims, wherein the automatic authentication of the user is automatically rejected by the electronic network service (201) after a predetermined period of time has elapsed after the network address is transmitted if automatic authentication did not take place.

5. Method (100) according to one of the preceding claims, wherein the electronic network service (201) provides or transmits the input mask for input of the network address.

6. Method (100) according to one of the preceding claims, wherein the authentication data comprise at least one of the following data:
- the method identifier associated with the method (100) for automatic authentication, in order to detect performance of the method (100) by means of a comparison of the method identifier with a previously stored reference method identifier;
- the network address of the user, in order to associate the authentication data with the user;
- a transaction identifier, in order to associate the authentication data with an authentication process by comparing the transaction identifier with reference transaction identifiers; and
- a password, in particular, a session key, in order to authenticate the user for the electronic network service (201) by transmitting the password thereto.

7. Method (100) according to one of the preceding claims, wherein the authentication data are compared with reference data in order to detect performance of the method (100).

8. Method (100) according to one of the preceding claims, wherein the message by means of which the authentication data are transmitted is prevented from being displayed for the user.

9. Method (100) according to one of the preceding claims, wherein the message further comprises a transaction identifier and wherein the transaction identifier is extracted from the message and compared with a reference transaction identifier in order to check the authenticity of the message.

10. Method (100) according to one of the preceding claims, wherein the message comprises a transaction identifier and a password, in particular a session key, and wherein the transaction identifier and the password are extracted from the message and transmitted to the electronic network service (201) in order to authenticate the user towards the electronic network service (201).

11. Method (100) according to Claim 10, wherein the transmitted transaction identifier is compared with reference transaction identifiers by the electronic network service (201) in order to check the authentication of the user.

12. Method (100) according to Claim 10 or 11, wherein the transmitted password is compared with reference passwords by the electronic network service (201) in order to check the authentication of the user.

13. Method (100) according to one of the preceding claims, wherein the message further comprises a network address of the electronic network service (201) and wherein the network address of the electronic network service (201) is extracted from the message in order to authenticate the user for the electronic network service (201) by calling the network address of the electronic network service (201).

14. Method (100) according to Claim 13, wherein the network address of the electronic network service (201) incorporates a password, in particular a session key, and wherein the password is extracted from the network address of the electronic network service (201) by the electronic network service (201) and compared with a reference password in order to check authentication of the user.

## Revendications

1. Procédé (100) d'authentification automatique d'un abonné par rapport à un service de réseau électronique (201) à l'aide d'une adresse réseau de l'abonné, comprenant :
la transmission (101) de l'adresse réseau de l'abonné à l'aide d'un terminal de communication (205) de l'abonné au service de réseau électronique (201) via un réseau de communication (203) ;
l'envoi (103) d'un message, lequel comprend des données d'authentification de l'abonné à l'adresse réseau transmise par le service de réseau électronique (201) via le réseau de communication (203), le message étant envoyé en réponse à la transmission (101) de l'adresse réseau ;
l'extraction automatique (105) des données d'authentification de l'abonné hors du message réceptionné par le terminal de communication (205) ; et
l'authentification automatique (107) de l'abonné à l'égard du service de réseau électronique (201) en utilisant les données d'authentification extraites de l'abonné par le terminal de communication (205),
le message comprenant une forme HTML qui comprend un identifiant de procédé, lequel est affecté au procédé (100) d'authentification automatique et la forme HTML comprenant un masque de saisie ou une page de connexion, l'identifiant de procédé étant réalisé sous la forme d'un champ de saisie caché dans la forme HTML.

2. Procédé (100) selon la revendication 1, l'adresse réseau étant l'une des adresses réseau suivantes :
- une adresse pour l'échange de courrier électronique ; ou
- un numéro de connexion, lequel est affecté à une ligne téléphonique, notamment à une ligne téléphonique mobile.

3. Procédé (100) selon l'une quelconque des revendications précédentes, l'adresse réseau transmise étant comparée par le service de réseau électronique (201) avec des adresses réseau prémémorisées, pour vérifier un droit d'accès de l'abonné.

4. Procédé (100) selon l'une quelconque des revendications précédentes, l'authentification automatique de l'abonné étant automatiquement refusée par le service de réseau électronique (201) après l'écoulement d'une période prédéfinie après la transmission de l'adresse réseau si aucune authentification automatique n'a eu lieu.

5. Procédé (100) selon l'une quelconque des revendications précédentes, le masque de saisie, destiné à saisir l'adresse réseau étant mis à disposition ou transmis par le service de réseau électronique (201).

6. Procédé (100) selon l'une quelconque des revendications précédentes, les données d'authentification comprenant au moins l'une des données suivantes :
- l'identifiant de procédé, lequel est affecté au procédé (100) d'authentification automatique, pour identifier la réalisation du procédé (100) par une comparaison de l'identifiant de procédé avec un identifiant de procédé de référence prémémorisé ;
- l'adresse réseau de l'abonné, pour affecter les données d'authentification à l'abonné ;
- un identifiant de transaction, pour affecter les données d'authentification à un processus d'authentification par comparaison de l'identifiant de transaction avec des identifiants de transactions de référence ; et
- un mot de passe, notamment une clé à usage unique, pour authentifier l'abonné à l'égard du service de réseau électronique (201) par une transmission du mot de passe à ce dernier.

7. Procédé (100) selon l'une quelconque des revendications précédentes, les données d'authentification étant comparées avec des données de référence, pour identifier la réalisation du procédé (100).

8. Procédé (100) selon l'une quelconque des revendications précédentes, un affichage du message à l'aide duquel les données d'authentification sont transmises étant empêché pour l'abonné.

9. Procédé (100) selon l'une quelconque des revendications précédentes, le message comprenant en outre un identifiant de transaction et l'identifiant de transaction étant extrait du message et comparé avec un identifiant de transaction de référence pour vérifier l'authenticité du message.

10. Procédé (100) selon l'une quelconque des revendications précédentes, le message comprenant un identifiant de transaction et un mot de passe, notamment une clé à usage unique et l'identifiant de transaction et le mot de passe étant extraits du message et transmis au service de réseau électronique (201) pour authentifier l'abonné à l'égard du service de réseau électronique (201).

11. Procédé (100) selon la revendication 10, l'identifiant de transaction transmis étant comparé par le service de réseau électronique (201) avec des identifiants de transaction de référence, pour vérifier l'authentification de l'abonné.

12. Procédé (100) selon la revendication 10 ou 11, le mot de passe transmis étant comparé par le service de réseau électronique (201) avec des mots de passe de référence, pour vérifier l'authentification de l'abonné.

13. Procédé (100) selon l'une quelconque des revendications précédentes, le message comprenant par ailleurs une adresse réseau du service de réseau électronique (201) et l'adresse réseau du service de réseau électronique (201) étant extraite du message, pour authentifier l'abonné à l'égard du service de réseau électronique (201) par appel de l'adresse réseau du service de réseau électronique (201).

14. Procédé (100) selon la revendication 13, dans l'adresse réseau du service de réseau électronique (201) étant intégré un mot de passe, notamment une clé à usage unique et le mot de passe étant extrait par le service de réseau électronique (201) hors de l'adresse réseau du service de réseau électronique (201) et comparé avec un mot de passe de référence, pour vérifier l'authentification de l'abonné.
